# EUROPÄISCHE PATENTANMELDUNG

(11) **EP 4 506 130 A1**
(43) Veröffentlichungstag der Anmeldung: **12.02.2025**
(21) Anmeldenummer: 24180648.8
(22) Anmeldetag: 07.06.2024
(51) Int. Cl.: B27N 3/18, B27N 3/20, B27N 5/02, B30B 11/02, B27N 1/00, B27N 3/00, B27N 3/04, B27N 3/12, B27N 3/22, B27N 5/00, B29C 43/00, B29C 43/02, B29C 70/06, B29C 70/12, B29C 70/34, B29C 70/46, B29C 70/54, B29C 43/32, B29C 43/34, B29C 43/58, B29C 43/36

(54) **VERFAHREN ZUR HERSTELLUNG VON DREIDIMENSIONALEN ERZEUGNISSEN AUS EINEM FASERHALTIGEN MATERIAL UNTER VERWENDUNG MINDESTENS EINES FORMWERKZEUGS UND FORMWERKZEUG**

(30) Priorität: 16.06.2023 DE 102023115817
(71) Anmelder: KIEFEL GmbH, 83395 Freilassing (DE)
(72) Erfinder: Strasser, Josef, 83224 Staudach-Egerndach (DE)
(74) Vertreter: DTS Patent- und Rechtsanwälte PartmbB

(57) **Zusammenfassung**

Es werden ein Verfahren zur Herstellung von dreidimensionalen Erzeugnissen mit mindestens einem schrägen Erzeugnisabschnitt aus einem faserhaltigen Material unter Verwendung mindestens eines Formwerkzeugs (10) und ein Formwerkzeug (10) beschrieben, wobei über eine Einrichtung 30 Schwingungen eingebracht werden, welche im Bereich von schrägen Abschnitten eine verbesserte Verdichtung von faserhaltigem Material bewirkt.

## Beschreibung

### Technisches Gebiet

Es werden ein Verfahren zur Herstellung von dreidimensionalen Erzeugnissen mit mindestens einem schrägen Erzeugnisabschnitt aus einem faserhaltigen Material unter Verwendung mindestens eines Formwerkzeugs und ein Formwerkzeug beschrieben.

Erzeugnisse aus faserhaltigem Material können bspw. als Verpackungen für Lebensmittel (bspw. Schalen, Kapseln, Boxen, Deckel, etc.) und Konsumgüter (bspw. elektronische Geräte etc.) sowie Getränkebehälter eingesetzt werden. Weiterhin können solche Erzeugnisse auch für Alltagsgegenstände, wie bspw. Einwegbesteck und -geschirr, verwendet werden. Faserhaltige Materialien umfassen natürliche Fasern oder künstliche Fasern. In letzter Zeit wird vermehrt faserhaltiges Material eingesetzt, welches Naturfasern aufweist oder aus solchen besteht, die bspw. aus nachwachsenden Rohstoffen oder Altpapier gewonnen werden können.

### Hintergrund

Beim Formen von Erzeugnissen aus einem faserhaltigen Material wird das faserhaltige Material zwischen Formflächen eines Formwerkzeugs verpresst. Beim Verpressen werden die Erzeugnisse erhitzt und stark verdichtet. Insbesondere bei der Herstellung von Erzeugnissen aus einem faserhaltigen Material in einem sogenannten "Dry-Fiber"-Herstellungsverfahren, wobei verhältnismäßig trockenes Fasermaterial verarbeitet wird, ergeben sich an schrägen Abschnitten der Erzeugnisse Schwierigkeiten beim Verpressen. Schräge Erzeugnisabschnitte sind gegenüber einer Hauptachse in Pressrichtung, in der Regel der Hochachse, eines Erzeugnisses geneigt. Von "Dry-Fiber" wird in der Regel bei einem Feuchtigkeitsanteil von ca. 0,1 bis 60 Gew.-%, bevorzugt bei einem Feuchtigkeitsanteil von 5 bis 30 Gew.-%, an Wasser des faserhaltigen Materials gesprochen.

Die Presskraft wirkt über die Formwerkzeughälften linear bzw. vertikal in Richtung des Erzeugnisbodens, wobei die Presskraft an den Erzeugniswänden je nach Schräge dabei abnimmt. Je steiler die Erzeugniswände gegenüber dem Erzeugnisboden verlaufen, desto geringer ist dann die auf die Erzeugniswände wirkende Presskraft. Dabei kommt es aufgrund der geringeren Presskraft zu einer schlechteren Verdichtung, wodurch die mechanischen Eigenschaften (z.B. Festigkeit) des herzustellenden Erzeugnisses gegenüber dem Erzeugnisboden deutlich schlechter sind. Darüber hinaus leidet dadurch die Oberflächenbeschaffenheit an den Erzeugniswänden.

Bisher wurde versucht dem Problem dadurch entgegenzutreten, indem flexible Werkzeuge mit einem aufblasbarem Innenwerkzeug ("Ballon") verwendet werden.

Flexible Werkzeuge weisen jedoch den Nachteil auf, dass durch das aufblasbare Innenwerkzeug, welches aus einem flexiblen Material bestehen muss, ein deutlich schlechterer Wärmeübergang bereitgestellt werden kann, so dass die Erzeugnisqualität an der Oberfläche und im Hinblick auf die mechanischen Eigenschaften schlechter ist, wie bei Erzeugnissen, die mittels Festwerkzeugen ohne flexible Innenwerkzeuge hergestellt werden.

### Aufgabe

Demgegenüber besteht die Aufgabe darin, eine Lösung zur Herstellung von Erzeugnissen aus einem faserhaltigen Material anzugeben, welche die Nachteile des Stands der Technik behebt, wobei Erzeugnisse mit gleichbleibender Qualität und mechanischen Eigenschaften über die gesamte Erzeugnisgeometrie herstellbar sind. Insbesondere besteht die Aufgabe darin eine solche Lösung für faserhaltiges Material bereitzustellen, welches in einem sogenannten "Dry-Fiber"-Verarbeitungsprozess verpresst wird.

### Lösung

Die vorstehend genannte Aufgabe wird durch ein Verfahren zur Herstellung von dreidimensionalen Erzeugnissen mit mindestens einem schrägen Erzeugnisabschnitt aus einem faserhaltigen Material unter Verwendung mindestens eines Formwerkzeugs gelöst, wobei das mindestens eine Formwerkzeug mindestens eine erste Werkzeugkomponente mit mindestens einer Kavität und mindestes eine zweite Werkzeugkomponente mit mindestens einem zur mindestens einen Kavität korrespondierenden Formteil aufweist, wobei das mindestens eine Formteil und die mindestens eine Kavität zur Ausbildung eines Formraums zwischen korrespondierenden Oberflächen der mindestens einen Kavität und des mindestens einen Formteils relativ zueinander bewegbar sind, aufweisend folgende Schritte:
- Einbringen eines faserhaltigen Materials in die mindestens eine Kavität der mindestens einen ersten Werkzeugkomponente,
- Schließen des Formwerkzeugs durch relative Verlagerung der mindestens einen ersten Werkzeugkomponente und der mindestens einen zweiten Werkzeugkomponente,
- Verpressen des faserhaltigen Materials innerhalb des Formraums, und
- Einbringen von Schwingungen durch Bewegung der mindestens einen ersten Werkzeugkomponente und/oder der mindestens einen zweiten Werkzeugkomponente relativ zur Pressrichtung während des Verpressens.

Durch das Einbringen von Schwingungen relativ (senkrecht, parallel oder einer anderen optimalen Wirkungsrichtung) zur Pressrichtung wird das faserhaltige Material immer wieder zwischen innerem und äußerem Werkzeug bewegt und damit "gequetscht", so dass das faserhaltige Material genauso verdichtet wird, wie in einem Abschnitt, auf den die Presskraft vollflächig wirken kann, so dass die Festigkeit auch an schrägen Flächen eines Erzeugnisses erhöht und die Oberflächenbeschaffenheit genauso ausgebildet werden kann, wie an den restlichen Oberflächen des Erzeugnisses.

Die Schwingungen des inneren und des äußeren Werkzeugs werden über die Oberflächen der Kavität und des Formteils auf die Fasern des faserhaltigen Materials übertragen, so dass die sich kontinuierlich bewegen und damit keine Leerstellen im Material entstehen.

Damit kann in einem Festwerkzeug ohne flexible Werkzeugkomponenten ein Verpressen von dreidimensionalen Erzeugnissen, welche mindestens einen schrägen Erzeugnisabschnitt aufweisen, mit homogener Festigkeit und Oberflächenqualität erreicht werden.

In weiteren Ausführungen können die Schwingungen über das mindestens eine Formteil eingebracht werden. Damit werden die Schwingungen von einem inneren Formwerkzeugteil eingebracht, was bei rotationssymmetrischen Erzeugnissen vorteilhaft sein kann, weil die Schwingungen gleichmäßig verteilt über die Oberfläche an schräge Seitenwände etc. eingebracht werden können. Schließlich können in weiteren Ausführungen die Schwingungen auch über die Kavität, also ein äußeres Formwerkzeugteil eingebracht werden. In noch weiteren Ausführungen können sowohl über ein inneres Formwerkzeugteil (Formteil) als auch über ein äußeres Formwerkzeugteil (Kavität) Schwingungen eingebracht werden, so dass die Fasern im Bereich von schrägen Erzeugnisabschnitten stärker verdichtet werden können, da im Formraum im Bereich von schrägen Erzeugnisabschnitten von beiden Seiten Schwingungen in das Material (Fasern) eingebracht wird.

In weiteren Ausführungen kann die Frequenz der Schwingungen während des Verpressens verändert werden. Hierdurch kann Einfluss auf die Verdichtung der Fasern und damit der Festigkeit des Erzeugnisses genommen werden. Bspw. kann die Frequenz während des Verpressens zu- oder abnehmen. Damit kann bspw. die Verdichtung gesteuert werden, weil die Fasern bspw. mit zunehmender Frequenz stärker verdichtet werden.

In weiteren Ausführungen können die Schwingungsdauer und die Dauer des Pressvorgangs verschieden sein. In solchen Ausführungen werden nicht über den gesamten Pressvorgang Schwingungen in das Material eingebracht. Bspw. kann zunächst ein Vorpressen ohne das Einbringen von Schwingungen erfolgen. In weiteren Ausführungen kann auch nach dem Einbringen von Schwingungen, nachdem die Fasern durch das Einbringen von Schwingungen verdichtet und durch Druck verpresst wurden, der Pressvorgang aufrechterhalten werden und die Fasern bzw. das Material des Erzeugnisses nachverpresst werden. Dabei kann der Druck während eines Nachpressvorgangs größer oder kleiner sein als der Druck im Pressvorgang während des Einbringens von Schwingungen. In weiteren Ausführungen können bspw. vor einem Pressvorgang bereits Schwingungen eingebracht werden, wodurch eine verbesserte Verteilung von Fasern des eingebrachten Fasermaterials erreicht wird.

In weiteren Ausführungen kann der Druck zum Verpressen während des Verpressens verändert werden. Dieser Druck kann sowohl verändert werden, wenn Schwingungen eingebracht werden, als auch während eines Nachpressvorgangs. Die Veränderung des Drucks kann insbesondere nach Maßgabe der eingebrachten Schwingungen verändert werden, so dass bspw. der Druck sukzessive erhöht werden kann. Es ist in weiteren Ausführungen vorgesehen, den Druck kontinuierlich zu verändern, um damit im Zusammenspiel mit den eingebrachten Schwingungen die Verdichtung der Fasern maßgeblich für ein optimales Verpressen zur Erreichung von vorgegebenen Festigkeitswerten anzupassen.

In weiteren Ausführungen können die Frequenz der Schwingungen und/oder die Schwingungsdauer an den Druck zum Verpressen angepasst werden. Damit kann insbesondere nach Maßgabe der Erzeugnisgeometrie und dem Material der Fasern, bspw. im Hinblick auf deren Eigenschaften und Ausgestaltung (Länge, Durchmesser, Orientierung), sowohl der Druck als auch die Frequenz und/oder Schwingungsdauer angepasst werden. Bspw. kann zu Beginn eines Pressvorgangs der Druck noch nicht sein Maximum erreicht haben, so dass der Formraum und insbesondere der Abstand der gegenüberliegenden Formflächen der Kavität und des Formteils im Bereich von schrägen Erzeugnisabschnitten größer ist wie bei maximalem Druck. Dabei kann die Frequenz der Schwingungen bspw. ebenfalls geringer sein als die Frequenz der Schwingungen bei maximalem Druck. Somit kann die Verdichtung der Fasern verbessert werden, da diese sich kontinuierlich verdichten können. Hierdurch werden bspw. Fehlstellen in fertigen schrägen Erzeugnisabschnitten zusätzlich vermieden.

In weiteren Ausführungen können die Schwingungen in einer Ebene senkrecht oder parallel oder einer optimierten Wirkrichtung zur Pressrichtung durch eine lineare oder rotierende Bewegung eingebracht werden. Die Art der Einbringung kann nach Ausgestaltung und Geometrie von Erzeugnissen erfolgen, wobei diese maßgeblich dafür ist, in welcher Art die Schwingungen für eine optimale Verdichtung eingebracht werden. Bspw. kann eine rotierende Bewegung bei rotationssymmetrischen Erzeugnissen vorteilhaft sein, wobei lineare Bewegungen bspw. dann vorteilhaft sein können, wenn Erzeugnisse radial abstehende Elemente aufweisen oder bspw. einen polygonalen Querschnitt aufweisen. In weiteren Ausführungen kann während eines Pressvorgangs zwischen einer linearen und einer rotierenden Bewegung zum Einbringen von Schwingungen gewechselt werden, wodurch die Verdichtung nochmals verbessert wird, weil die Fasern in einer anderen Schwingungsart zusätzlich oder andersartig bewegt werden können und damit Freiräume belegen können.

In weiteren Ausführungen können die Schwingungen nach Maßgabe einer Erzeugnisgeometrie des herzustellenden Erzeugnisses eingebracht werden. Dadurch kann die Verdichtung auf die jeweilige Geometrie angepasst werden.

Während des Pressvorgangs können das eingebrachte Material bzw. die Fasern über das Formwerkzeug erwärmt werden, wobei hierzu die erste Werkzeugkomponente und/oder die zweite Werkzeugkomponente beheizbar sein können und aus einem wärmeleitenden Werkstoff bestehen. In noch weiteren Ausführungen können der Druck sowie die Schwingungsdauer und Frequenz nach Maßgabe der Werkzeug- und Presstemperatur angepasst werden.

Die vorstehend genannte Aufgabe wird auch durch ein Formwerkzeug zur Herstellung von dreidimensionalen Erzeugnissen aus einem faserhaltigen Material gelöst, aufweisend mindestens eine erste Werkzeugkomponente mit mindestens einer Kavität und mindestes eine zweite Werkzeugkomponente mit mindestens einem zur mindestens einen Kavität korrespondierenden Formteil, wobei das mindestens eine Formteil und die mindestens eine Kavität zur Ausbildung eines Formraums zwischen korrespondierenden Oberflächen der mindestens einen Kavität und des mindestens einen Formteils relativ zueinander bewegbar und zum Verpressen eines in den Formraum einbringbaren faserhaltigen Materials verpressbar sind, ferner aufweisend eine Einrichtung zum Einbringen von Schwingungen durch Bewegung der mindestens einen ersten Werkzeugkomponente und/oder der mindestens einen zweiten Werkzeugkomponente senkrecht zur Pressrichtung während eines Verpressens.

Das Formwerkzeug ermöglicht die Herstellung von Erzeugnissen wie vorstehend beschrieben und kann die vorstehenden Verfahren durch entsprechende Ansteuerung und Veränderung von Druck, Frequenz, Schwingungsdauer und Temperatur umsetzen.

Weitere Merkmale, Ausgestaltungen und Vorteile ergeben sich aus der nachfolgenden Darstellung von Ausführungsbeispielen mit Bezug auf die Figuren.

### Kurzbeschreibung der Figuren

In den Zeichnungen zeigt:
- Fig. 1: eine schematische Darstellung eines Formwerkzeugs zur Herstellung von Erzeugnissen aus einem faserhaltigen Material;
- Fig. 2: eine schematische Darstellung eines Formwerkzeugs zur Herstellung von Erzeugnissen in einer Ausführung gemäß dem Stand der Technik;
- Fig. 3: eine schematische Darstellung eines Formwerkzeugs nach dem Einbringen eines Fasermaterials mit einer Einrichtung zum Einbringen von Schwingungen;
- Fig. 4a), b): schematische Darstellungen von Einrichtungen zum Einbringen von Schwingungen;
- Fig. 5: eine schematische Darstellung einer Formanlage zum Herstellen von Erzeugnissen aus einem Fasermaterial; und
- Fig. 6: ein Verfahren zum Herstellen von Erzeugnissen aus einem Fasermaterial.

### Detaillierte Beschreibung von Ausführungsbeispielen

Nachfolgend werden mit Bezug auf die Figuren Ausführungsbeispiele der hierin beschriebenen technischen Lehre dargestellt. Für gleiche Komponenten, Teile und Abläufe werden in der Figurenbeschreibung gleiche Bezugszeichen verwendet. Für die hierin offenbarte technische Lehre unwesentliche oder für einen Fachmann sich erschließende Komponenten, Teile und Abläufe werden nicht explizit wiedergegeben. Im Singular angegebene Merkmale sind auch im Plural mitumfasst, sofern nicht explizit etwas anderes ausgeführt ist. Dies betrifft insbesondere Angaben wie "ein" oder "eine".

Die Figuren zeigen Ausführungsbeispiele von Vorrichtungen für die Herstellung von Erzeugnissen aus einem formbaren Material, wobei die gezeigten Ausführungsbeispiele keine Einschränkung im Hinblick auf weitere Ausbildungen und Modifikationen der beschriebenen Ausführungen darstellen.

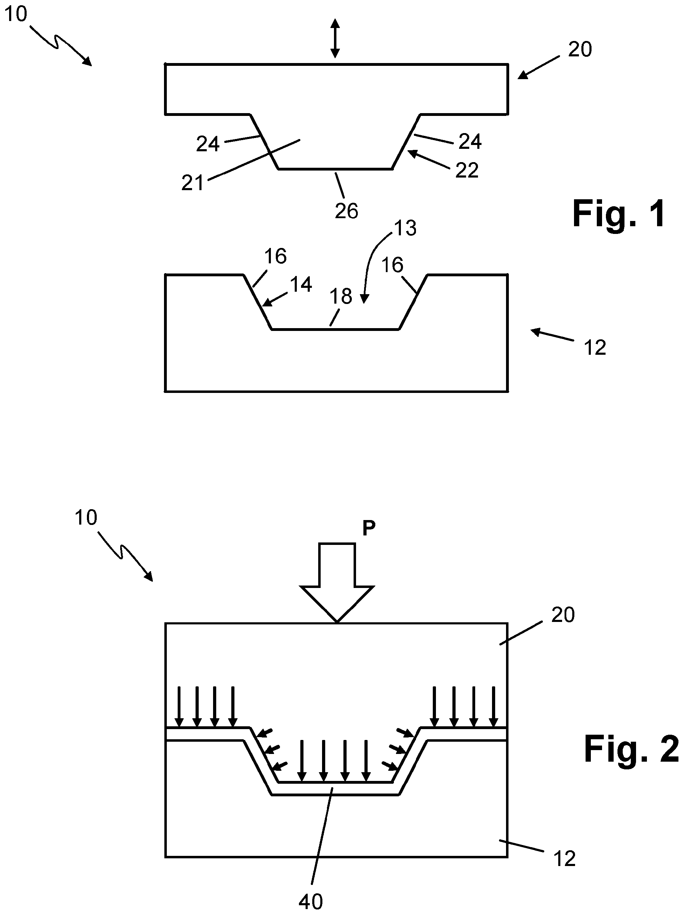

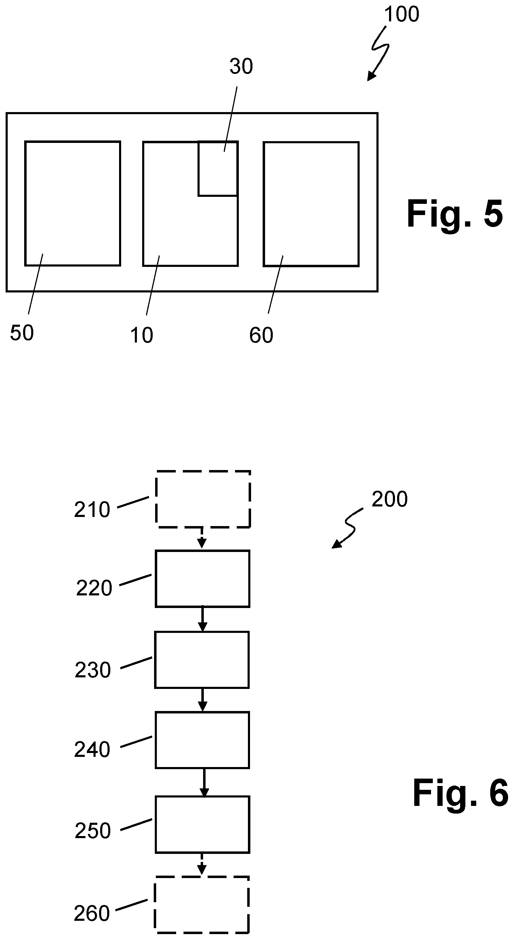

Fig. 1 zeigt eine schematische Darstellung eines Formwerkzeugs 10 zur Herstellung von Erzeugnissen aus einem Fasermaterial. Das Formwerkzeug 10 kann Bestandteil einer Formanlage 100 sein, wie sie nachfolgend mit Bezug auf Fig. 5 gezeigt ist. Das Formwerkzeug 10 weist eine erste Werkzeugkomponente 12 auf. Die erste Werkzeugkomponente 12 besteht aus einem Werkzeugmaterial für die Herstellung von Erzeugnissen aus einem faserhaltigen Material und weist hierzu entsprechende Eigenschaften insbesondere im Hinblick auf Festigkeit und eine Wärmeleitfähigkeit auf. Eine zweite Werkzeugkomponente 20 des Formwerkzeugs 10 kann aus dem gleichen Material bestehen und gleiche Eigenschaften aufweisen, wie die erste Werkzeugkomponente 12. In der ersten Werkzeugkomponente 12 und/oder der zweiten Werkzeugkomponente 20 können Heizeinrichtungen vorgesehen sein, welche die Werkzeugkomponenten 12, 20 auf eine zum Verpressen von faserhaltigem Material erforderliche Temperatur bringen. Üblicherweise erfolgt das Verpressen von faserhaltigem Material bei Temperaturen im Bereich von 20 bis 300 °C, idealerweise von 100 - 200°C. Zusätzlich werden die Werkzeugkomponenten 12, 20 unter hohem Druck im Bereich von 100 N/cm² bis 5.000 N/cm², idealerweise von 250 N/cm² bis 1.000 N/cm² spezifischer Flächenlast verpresst. Hierzu kann das Formwerkzeug 10 mit Presseinrichtungen, wie bspw. einer Kniehebelpresse in Wirkverbindung stehen. Die Kniehebelpresse kann Bestandteil einer Formanlage 100 sein. Das Formwerkzeug 10 kann auswechselbar mit der Kniehebelpresse der Formanlage 100 verbunden sein, so dass über eine Formanlage 100 verschiedene Erzeugnisse durch einen Formwerkzeugwechsel hergestellt werden können.

Die erste Werkzeugkomponente 12 weist mindestens eine Kavität 13 auf, deren Oberfläche 14 die äußere Geometrie eines herzustellenden Erzeugnisses abbildet. Die Kavität 13 weist einen Formboden 18 und sich vom Formboden 18 seitlich nach oben erstreckende Schrägen 16 auf. Der Winkel zwischen dem Formboden 18 und den Schrägen 16 kann bspw. zwischen 91° und 179° liegen. In den meisten Ausführungen von Erzeugnissen, wie bspw. Bechern, Schalen etc., weist ein Formboden 18 zu seitlichen Schrägen 16 einen Winkel von 91° bis 105° auf.

Die erste Werkzeugkomponente 12 kann in weiteren Ausführungen mehrere Kavitäten 13 aufweisen, die sich flächig über die erste Werkzeugkomponente 12 erstrecken.

Die zweite Werkzeugkomponente 20 weist mindestens ein korrespondierend zur mindestens einen Kavität 13 der ersten Werkzeugkomponente 12 angeordnetes Formteil 21 auf, welches im geschlossenen Zustand des Formwerkzeugs 10 in die Kavität 13 eintaucht. Das Formteil 21 weist eine Oberfläche 22 auf, welche korrespondierend zur Oberfläche 14 der Kavität 13 ausgebildet ist. Die Oberfläche 22 erstreckt sich über einen Formteilboden 26, der im gezeigten Ausführungsbeispiel parallel zum Formboden 18 ausgerichtet ist. Schrägen 24 des Formteils 21 liegen im geschlossenen Zustand des Formwerkzeugs 10 den Schrägen 16 gegenüber. Im geschlossenen Zustand des Formwerkzeugs 10 wird zwischen der Oberfläche 14 der mindestens einen Kavität 13 und der Oberfläche 22 des Formteils 21 ein Formraum 11 ausgebildet. Im Formraum 11 wird zuvor in die Kavität 13 eingebrachtes faserhaltiges Material unter Druck und Temperatureintrag verpresst. Dabei kann bereits beim Schließen des Formwerkzeugs 10 ein Komprimieren von in die Kavität 13 eingebrachter Faserschicht und damit ein Verpressen erfolgen. Im vollständig geschlossenen Zustand des Formwerkzeugs 10 wird das finale Verpressen durchgeführt.

Die erste Werkzeugkomponente 12 und die zweite Werkzeugkomponente 20 können jeweils eine Werkzeugplatte aufweisen. An den einander zugewandten Oberflächen der Werkzeugplatten können in weiteren Ausführungen Kavitäten 13 und Formteile 21 integral verbaut oder lösbar mit den Werkzeugplatten verbunden sein. Bei einer lösbaren Verbindung können die Kavitäten 13 und Formteile 21 bspw. über Schrauben befestigt sein. In solchen Ausführungen kann ein Wechsel mindestens einer Kavität 13 und/oder Formteil 21 erfolgen, wenn bspw. eine Kavität 13/ein Formteil 21 beschädigt, verschmutzt ist oder ein Austausch zur Herstellung anderer Erzeugnisse erforderlich ist.

Die Herstellung von Erzeugnissen aus einem faserhaltigen Material erfolgt durch Einbringen eines geeigneten Materials, bspw. von Fasermaterial, das ausschließlich aus natürlichen Fasern besteht, die einen relativ geringen Feuchtigkeitsanteil aufweisen. Der Wasseranteil kann bspw. 5 bis 30 Gew.-% betragen. Solches Fasermaterial kann bspw. als vorgeformter Vorformling aus einem lockeren Faserverbund (fluff pulp) oder als einzelne Fasern eingebracht werden. In der folgenden Beschreibung wird für das faserhaltige Material allgemein von Fasermaterial gesprochen. Ein solches Fasermaterial kann verschiedene Faserarten umfassen.

Fig. 2 zeigt eine schematische Darstellung eines Formwerkzeugs 10 zur Herstellung von Erzeugnissen in einer Ausführung gemäß dem Stand der Technik, nachdem ein Fasermaterial eingebracht und das Formwerkzeug 10 geschlossen wurde. Es wird zum Verpressen, wie über den Pfeil P schematisch gezeigt ein Druck auf das Formwerkzeug 10 aufgebracht. In dem gezeigten Ausführungsbeispiel erfolgt das Einbringen von Druck nur von oben über die zweite Werkzeugkomponente 20. In weiteren Ausführungen der hierin beschriebenen Formwerkzeuge 10 kann auch ein Druck von unten über die erste Werkzeugkomponente alternativ oder zusätzlich eingebracht werden. Durch den eingebrachten Druck wird das Fasermaterial im Formraum 11 durch die relative Verlagerung des Formteils 21 und der Kavität 13 verpresst. Der zur Herstellung eines Erzeugnisses erforderliche Druck führt in den orthogonal zum eingebrachten Druck P erstreckenden Bereichen zu einem gewünschten Verpressen, da der Druck vollflächig auf diese Bereiche wirken kann. In diesen Bereichen weist ein fertiges Erzeugnis nach dem Verpressen die erforderliche Festigkeit auf, da die Fasern in diesen Bereichen ausreichend verdichtet werden konnten. In Fig. 2 ist dies durch die Pfeile im Bereich des Formbodens 18 und den parallel dazu verlaufenden Randbereichen gezeigt, welche eine größere Länge bzw. Höhe aufweisen, wie die kleinen Pfeile im Bereich der Schrägen 16 und 24. Im Bereich der Schrägen 160 und 24 kann die Presskraft über den eingebrachten Druck jedoch nicht die erforderliche Wirkung entfalten, was je nach Ausbildung der Schrägen 16 und 24 stark abnimmt. So kann bei besonders steilen Schrägen 16 und 24 über die vertikal wirkende Presskraft nur eine sehr schlechte Verdichtung der Fasern des Fasermaterials erreicht werden, so dass das fertige Erzeugnis nach dem Verpressen vor allem im Bereich von Schrägen keine ausreichende Festigkeit aufweist.

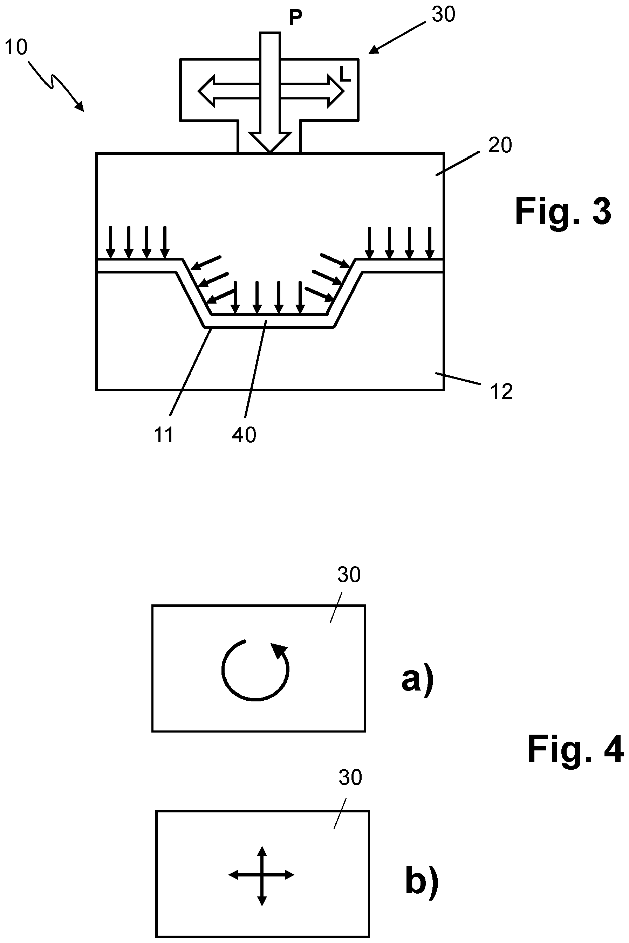

Fig. 3 zeigt eine schematische Darstellung eines Formwerkzeugs 10 nach dem Einbringen eines Fasermaterials 40 mit einer Einrichtung 30 zum Einbringen von Schwingungen gemäß der hierin offenbarten technischen Lehre, wobei über die gesamte Oberfläche eine im Wesentlichen gleichbleibende Verdichtung von eingebrachtem Fasermaterial 40 erreicht wird, so dass ein fertiges Erzeugnis über die gesamte Oberfläche bzw. Erzeugnisgeometrie im Wesentlichen eine gleichmäßige Festigkeit aufweist.

Das Verpressen und Einbringen von Schwingungen kann im Wesentlichen unabhängig von der Art des Einbringens von Fasermaterial 40 erfolgen. Bspw. können einzelne Fasern und/oder Faserbündel, wobei Faserbündel eine verhältnismäßig geringe Anzahl an Fasern aufweisen, die aneinanderhängen und somit ein Bündel bilden, eingebracht werden. In weiteren Ausführungen kann ein Fasermaterial 40 als Vorformling oder Fasermatte aus losen Fasern in die Kavität 13 eingebracht werden. Ein Vorformling kann bspw. bereits im Wesentlichen die Geometrie des herzustellenden Erzeugnisses aufweisen. Eine Fasermatte bzw. ein Abschnitt einer Fasermatte weisen demgegenüber keine vorgeformten Abschnitte oder Ausformungen auf und können in eine Kavität 13 eingelegt werden. Die Fasermatte kann dabei vliesartig ausgebildet sein und sich aufgrund ihres Eigengewichts an die Oberfläche 14 der Kavität 13 anlegen. Sowohl ein Vorformling als auch eine Fasermatte können einen relativ lockeren Verbund aus einzelnen Fasern und/oder Faserbündeln aufweisen. Die Fasern/Faserbündel können in weiteren Ausführungen in einer Vereinzelungseinrichtung, wie bspw. einer Mühle, aus bspw. Papier, Karton, Vlies, Pflanzenfasern etc., gewonnen werden. Die Fasern bzw. eine Fasermatte/Vorformling können einen Feuchtigkeitsanteil von 0-60 Gew.-% Wasser aufweisen. In weiteren Ausführungen weisen die Fasern bzw. eine Fasermatte/Vorformling einen Feuchtigkeitsanteil von 5-40 Gew.-% Wasser auf. In noch weiteren Ausführungen weisen die Fasern bzw. die Fasermatte/Vorformling einen Feuchtigkeitsanteil von 7-30 Gew.-% Wasser auf.

Nach der Vereinzelung in einer Vereinzelungseinrichtung liegen einzelne Fasern vor, die je nach verwendetem Material in einem Längenspektrum von wenigen Mikrometern bis bspw. 6 mm liegen. Je nach Länge der Fasern weisen diese verschiedene Eigenschaften auf. So können mit langen Fasern grundsätzlich höhere Festigkeiten bei Erzeugnissen erreicht werden, jedoch weisen lange Fasern eine schlechte Formation auf, d.h. es lässt sich mit langen Fasern (bspw. im Bereich von 4 bis 6 mm) in der Regel nur eine ungleichmäßige Verteilung an der Produktoberfläche erreichen. Demgegenüber weisen kurze Fasern (1-2 mm) eine geringere Festigkeit bei einer guten Formation auf. Die Dichte eines fertigen Erzeugnisses wird maßgeblich durch Feinstoffe (Faserteile) mit einer Länge von unter 1 mm beeinflusst, deren Anteil bei kurzen Fasern grundsätzlich höher ist. Damit können mit eher kürzeren Fasern bzw. Faseranteilen höhere Verdichtungen erreicht werden, wodurch sich die mechanischen Eigenschaften und Barriereeigenschaften eines Erzeugnisses beeinflussen lassen. Dabei kann bspw. eine sehr dichte Faserschicht erzeugt werden. Insgesamt lassen sich somit durch die Länge der Fasern auch die Eigenschaften eines herzustellenden Erzeugnisses beeinflussen.

Das Fasermaterial 40 kann Zusätze aufweisen, welche sich auf die mechanischen Eigenschaften und die Barrierewirkung auswirken. Nach Maßgabe der Zusammensetzung des Fasermaterials 40 können hergestellte Erzeugnisse biologisch abbaubar sein und selbst wieder als Ausgangsmaterial für die Herstellung von Erzeugnissen, wie bspw. eines becherartigen Erzeugnisses (vgl. Form von Fig. 3) aus einem Fasermaterial, dienen und kompostiert werden, weil diese in der Regel vollständig zersetzt werden können und keine bedenklichen, umweltgefährdenden Stoffe enthalten.

Ein Erzeugnis kann insbesondere ein dreidimensionales Erzeugnis sein, wie bspw. ein Becher, ein Deckel, eine Schale, eine Kapsel, ein Teller oder ein weiteres Form- und/oder Verpackungsteil (bspw. als Halter-/Stützstrukturen für elektronische oder andere Geräte).

Zum Einbringen von Schwingungen ist die obere zweite Werkzeugkomponente 20 mit einer Einrichtung 30 verbunden. In weiteren Ausführungen kann alternativ oder zusätzlich die untere erste Werkzeugkomponente 12 mit einer Einrichtung 30 verbunden sein. In noch weiteren Ausführungen können an einer ersten Werkzeugkomponente 12 und/oder zweiten Werkzeugkomponente 20 auch mindestens eine zweite Einrichtung 30 vorgesehen sein, welche Schwingungen einbringen.

Die mindestens eine Einrichtung 30 führt seitliche Bewegungen L aus, wodurch Schwingungen mit einer Frequenz im Bereich von 500 bis 50.000 Hz, idealerweise 5.000 bis 30.000 Hz erzeugt werden. Die Frequenz der Schwingungen kann während eines Pressvorgangs verändert werden.

In zumindest einem Zeitabschnitt werden bei der Herstellung von Erzeugnissen über das Formwerkzeug 10 ein Druck P ausgeübt und gleichzeitig Schwingungen über die mindestens eine Einrichtung 30 senkrecht zur Pressrichtung (schematisch durch Pfeil P gezeigt) eingebracht, so dass das Fasermaterial 40 bzw. die Fasern insbesondere im Bereich der Schrägen 16, 24 immer wieder zwischen den Oberflächen 14, 22 der Kavität 13 und des Formteils 21 gequetscht werden. Dadurch wird das Fasermaterial 40 bzw. das Erzeugnis im Bereich der Schrägen 16, 24 ebenfalls verdichtet, wobei das Fasermaterial 40 somit über die gesamte Oberfläche des herzustellenden Erzeugnisses im Wesentlichen gleich stark verdichtet wird, wie durch die Pfeile am Fasermaterial 40 in Fig. 3 schematisch gezeigt. Die Pfeile weisen gegenüber der Darstellung aus Fig. 2 eine gleiche Länge auf, was die Presswirkung auf die Oberfläche des Fasermaterials 40 veranschaulicht. Wie gezeigt, ist in Fig. 3 die Presswirkung im Wesentlichen gleich groß, wobei in Fig. 2 die Presswirkung nur im Bereich der orthogonal zur Pressrichtung verlaufenden Flächen ausreichend groß und im Bereich der Schrägen 16, 24 zu klein ist.

Die mindestens eine Einrichtung 30 kann bspw. direkt mit der ersten Werkzeugkomponente 12 und/oder der zweiten Werkzeugkomponente 20 verbunden sein. Die mindestens eine Einrichtung 30 kann bspw. mit der ersten Werkzeugkomponente 12 und/oder der zweiten Werkzeugkomponente 20 verschraubt oder integraler Bestandteil sein. Die mindestens eine Einrichtung 30 kann zentral in Bezug auf mindestens eine Kavität 13 und/oder einer Werkzeugkomponente 12, 20 angeordnet sein. Dabei kann eine gemeinsame Einrichtung 30 für alle Kavitäten 13 und/oder Formteile 21 vorgesehen sein. In weiteren Ausführungen kann für jede Kavität 13 und/oder Formteil 21 eine separate Einrichtung 30 vorgesehen sein.

In Ausführungen mit Kavitäten 13 und Formteilen 21, welche bspw. über Schrauben mit Werkzeugplatten verbindbar sind, ist die Verbindung zwischen den Werkzeugplatten und den damit befestigten Kavitäten 13 und Formteilen 21 so ausgebildet, dass über die mindestens eine Einrichtung 30 eingebrachte Schwingungen ohne Dämpfung übertragen werden.

Die mindestens eine Einrichtung 30 kann bspw. als Rüttler oder als Ultraschallsonotrode ausgeführt sein, der elektrisch betrieben wird. Die Leistung einer solchen Einrichtung 30 ist dabei nach Maßgabe des zu bewegenden Gewichts des Formwerkzeugs 10 und der Größe des Formraums 11 sowie des Fasermaterials und der aufgebrachten Presskraft P zu bestimmen. Hierzu kann vorab näherungsweise ermittelt werden, mit welcher Leistung die Schwingungen eingebracht werden. Einrichtungen 30 oder Rüttler können einen Motor aufweisen, der mindestens eine Welle mit einer Unwucht aufweist. Dabei werden durch die Rotation Zentrifugalkräfte erzeugt, die für die hierin beschriebene Anwendung im Bereich zwischen 1.000 N/cm² und 10.000 N/cm² spezifische Flächenpressung liegen können.

Die Fig. 4a), b) zeigen schematische Darstellungen von Einrichtungen 30 zum Einbringen von Schwingungen. Je nach Ausbildung der mindestens einen Einrichtung 30 und deren Anordnung an einer ersten Werkzeugkomponente 12 und/oder einer zweiten Werkzeugkomponente 20 können die Schwingungen kreisförmig (Fig. 4a) oder geradlinig (Fig. 4b) eingebracht werden. In den Ausführungen gemäß Fig. 4b) können Schwingungen sowohl nur in einer Richtung als auch in orthogonal zueinander verlaufenden Richtungen eingebracht werden.

Die Art der Einbringung von Schwingungen kann maßgeblich von der Geometrie des herzustellenden Erzeugnisses abhängen.

Fig. 5 zeigt eine schematische Darstellung einer Formanlage 100 zum Herstellen von Erzeugnissen aus einem Fasermaterial 40. Die Formanlage 100 weist mindestens eine Steuerung 50, eine Zuführeinrichtung 60 und ein Formwerkzeug 10 auf. Das Formwerkzeug 10 weist zusätzlich mindestens eine Einrichtung 30 auf, über welche Schwingungen in das Formwerkzeug 10 eingebracht werden. Die Steuerung 50 dient zur Steuerung der Prozesse und Abläufe der Formanlage 100 und steht hierzu mit den entsprechenden Einrichtungen in Verbindung. Die Steuerung 50 regelt den Energiebedarf und Stoffumsatz und verarbeitet hierzu Informationen und Steuerbefehle. Die Zuführeinrichtung 60 dient zur Zufuhr von Fasermaterial zwischen eine erste Werkzeugkomponente 12 und eine zweite Werkzeugkomponente 20 eines Formwerkzeugs 10, das mindestens eine Kavität 13 und ein korrespondierendes Formteil 21 aufweist. In weiteren Ausführungen kann eine Formanlage 100 ein Formwerkzeug 10 mit einer Vielzahl an Kavitäten 13 und korrespondierenden Formelementen 21 aufweisen.

Das Fasermaterial 40 kann als Vorformling, als Fasermatte oder als loses Fasermaterial über die Zuführeinrichtung 60 in mindestens eine Kavität 13 mindestens eines Formwerkzeugs 10 eingebracht werden. In weiteren Ausführungen kann das faserhaltige Material befeuchtet werden, um beim anschließenden Verpressen die Bindungswirkung zwischen den Fasern des Fasermaterials 40 zu verbessern. In noch weiteren Ausführungen kann eine Formanlage 100 auch eine Vorformstation aufweisen, in welcher Vorformlinge erzeugt werden. Hierzu können ferner in weiteren Ausführungen Formanlagen 100 zusätzlich oder alternativ einen Vorratsbehälter für Fasermaterial 40 aufweisen. Schließlich kann eine Formanlage 100 eine Vorrichtung zur Entnahme und zur weiteren Verarbeitung geformter Erzeugnisse aufweisen.

Anschließend kann ein hergestelltes Erzeugnis aus der mindestens einen Kavität 13 ausgebracht und einer weiteren Verarbeitung (Beschichten, Befüllen, Verschließen, Bedrucken, Stapeln, Verpacken, etc.) zugeführt werden.

Fig. 6 zeigt schematisch ein Verfahren 200 zum Herstellen von Erzeugnissen aus einem Fasermaterial. Das Herstellungsverfahren kann unter Verwendung einer Formanlage 100 erfolgen, wie sie in Fig. 5 gezeigt ist. In weiteren Ausführungen kann das Verfahren 200 unter Verwendung eines Formwerkzeugs 10 erfolgen, das eine andere Ausbildung wie die in Fig. 3 gezeigte Ausbildung aufweist und Bestandteil einer anders als in Fig. 5 gezeigten Ausführung einer Formanlage 100 ist.

In einem optional vorgesehenen Verfahrensschritt 210 erfolgt das Bereitstellen von Fasermaterial 40. Das Fasermaterial 40 kann je nach Art des Materials auf unterschiedliche Art und Weise bereitgestellt werden. So kann die Bereitstellung zusätzlich auch die Herstellung und/oder Verarbeitung des Fasermaterial 40 umfassen.

In einem nachfolgenden Verfahrensschritt 220 erfolgt das Einbringen des Fasermaterials 40 in mindestens eine Kavität 13 mindestens einer ersten Werkzeugkomponente 12 eines Formwerkzeugs 10. Das Fasermaterial 40 kann als lose Fasern/Faserbündel, als Fasermatte oder als Vorformling eingebracht werden. Das Einbringen kann unter Verwendung einer Zuführeinrichtung 60 einer Formanlage 100 erfolgen.

Nach dem Einbringen des Fasermaterials 40 wird das Formwerkzeug 10 in einem Verfahrensschritt 230 durch relative Verlagerung der mindestens einen ersten Werkzeugkomponente 12 und/oder der mindestens einen zweiten Werkzeugkomponente 20 geschlossen. Während des Schließens kann das Fasermaterial 40 teilweise komprimiert werden.

In einem Verfahrensschritt 240 erfolgt ein Verpressen des Fasermaterials 40 innerhalb des Formraums 11 zwischen der Oberfläche 14 der Kavität 13 und der Oberfläche 22 des Formteils 21. In einem Verfahrensschritt 250 erfolgt ein Einbringen von Schwingungen durch Bewegung der mindestens einen ersten Werkzeugkomponente 12 und/oder der mindestens einen zweiten Werkzeugkomponente 20 senkrecht zur Pressrichtung während des Verpressens, wobei die Schwingungen durch mindestens eine Einrichtung 30 eingebracht werden. Hierbei wird das Fasermaterial 40 zum finalen Erzeugnis verpresst und die Fasern innerhalb des Formraums 11 im Bereich der Schrägen 16, 24 durch die Schwingungen verdichtet.

Während des Pressvorgangs kann über die erste Werkzeugkomponente 12 und/oder die zweite Werkzeugkomponente 20 Wärme eingebracht bzw. das Fasermaterial 40 erwärmt werden, wodurch die Verbindung der Fasern des Fasermaterials 40 wesentlich beeinflusst wird. Vorzugsweise werden hierzu die mindestens eine Kavität 13 und/oder das mindestens eine Formteil 21 über bspw. in einer Werkzeugplatte angeordnete Heizelemente (z.B. elektrisch ansteuerbare Heizpatronen) erwärmt, so dass die Oberfläche 14 der mindestens einen Kavität 13 und/oder die Oberfläche 22 des mindestens einen Formteils 21 eine Oberflächentemperatur von 20 bis 300 °C, idealerweise 50 bis 150°C aufweisen.

Das Einbringen von Schwingungen und die Druckbeaufschlagung während eines Pressvorgangs können zeitlich unterschiedlich lange erfolgen und in ihrer Intensität verändert werden. In weiteren Ausführungen können der Zeitpunkt des Beginns des Pressvorgangs und der Zeitpunkt des Beginns des Einbringens von Schwingungen unterschiedlich sein. Bspw. können in weiteren Ausführungen zuerst Schwingungen eingebracht werden und zeitversetzt der Pressvorgang gestartet werden. In weiteren Ausführungen beginnt der Pressvorgang zeitlich vor dem Einbringen von Schwingungen. In weiteren Ausführungen erfolgt das Einbringen von Schwingungen zeitgleich mit dem Pressvorgang.

In noch weiteren Ausführungen können der Pressvorgang oder das Einbringen von Schwingungen beendet werden, bevor das Einbringen von Schwingungen oder der Pressvorgang beendet werden. In noch weiteren Ausführungen können der Druck während des Pressvorgangs und/oder die Dauer und Stärke der Schwingungen während des Verpressens verändert werden. Bspw. kann das Einbringen von Schwingungen bei einem kontinuierlich steigenden Druck zum Verpressen des Fasermaterials 40 verstärkt werden, wozu bspw. die Frequenz der Schwingungen erhöht wird. In weiteren Ausführungen kann bspw. die Zentrifugalkraft einer Unwucht durch Veränderung der Drehzahl einer mit der Unwucht verbundenen Welle erfolgen. In weiteren Ausführungen können demgegenüber sowohl die Presskraft kontinuierlich als auch die Intensität der Schwingungen (bspw. Reduzierung der Frequenz; Reduzierung Drehzahl einer Welle mit Unwucht) abnehmen.

In optional vorgesehenen Verfahrensschritten 260 können weitere Herstellungs- und Verarbeitungsschritte erfolgen. Hierzu zählen bspw. ein Beschichten, ein Befüllen, ein Verschließen, ein Stapeln, ein Bedrucken, ein Verpacken, eine Qualitätsprüfung etc.

Der vorstehende Ablauf kann anschließend für mindestens ein neues Erzeugnis wiederholt werden.

Vorteilhafterweise kann durch das Einbringen von Schwingungen die Flächenpressung an der gesamten Oberfläche eines Formwerkzeugs 10 bzw. der Geometrie eines herzustellenden Erzeugnisses auch im Bereich von Schrägen 16, 24 im Wesentlichen gleich groß sein wie in parallel zur Pressrichtung ausgerichteten Flächen des Formwerkzeugs 10 (bspw. Formboden 18; Formteilboden 26), wobei die Pressrichtung nicht parallel zu den Schrägen 16, 24 verläuft. Hierüber wird ohne die bekannten Nachteile des Stands der Technik eine gleichmäßige Festigkeit über die gesamte Oberfläche eines Erzeugnisses erreicht. Insbesondere kann auf flexible Werkzeugkomponenten verzichtet werden, welche im Hinblick auf die Wärmeübertragung Nachteile aufweisen. Weiterhin können auch bei dünnwandigen Erzeugnissen eine gleichbleibende Festigkeit und gleiche Eigenschaften über die gesamte Oberfläche eines Erzeugnisses erreicht werden.

### Bezugszeichenliste

- 10: Formwerkzeug
- 11: Formraum
- 12: erste Werkzeugkomponente
- 13: Kavität
- 14: Oberfläche
- 16: Schräge
- 18: Formboden
- 20: zweite Werkzeugkomponente
- 21: Formteil
- 22: Oberfläche
- 24: Schräge
- 26: Formteilboden
- 30: Einrichtung
- 40: Fasermaterial
- 50: Steuerung
- 60: Zuführeinrichtung
- 100: Formanlage
- 200: Verfahren
- 210-260: Verfahrensschritt

## Patentansprüche

1. Verfahren zur Herstellung von dreidimensionalen Erzeugnissen mit mindestens einem schrägen Erzeugnisabschnitt aus einem faserhaltigen Material, unter Verwendung mindestens eines Formwerkzeugs (10), wobei das mindestens eine Formwerkzeug (10) mindestens eine erste Werkzeugkomponente (12) mit mindestens einer Kavität (13) und mindestes eine zweite Werkzeugkomponente (20) mit mindestens einem zur mindestens einen Kavität (13) korrespondierenden Formteil (21) aufweist, wobei das mindestens eine Formteil (21) und die mindestens eine Kavität (13) zur Ausbildung eines Formraums (11) zwischen korrespondierenden Oberflächen (14; 22) der mindestens einen Kavität (13) und des mindestens einen Formteils (21) relativ zueinander bewegbar sind, aufweisend folgende Schritte:
- Einbringen eines faserhaltigen Materials in die mindestens eine Kavität (13) der mindestens einen ersten Werkzeugkomponente (12),
- Schließen des Formwerkzeugs (10) durch relative Verlagerung der mindestens einen ersten Werkzeugkomponente (12) und der mindestens einen zweiten Werkzeugkomponente (20),
- Verpressen des faserhaltigen Materials innerhalb des Formraums (11), und
- Einbringen von Schwingungen durch Bewegung der mindestens einen ersten Werkzeugkomponente (12) und/oder der mindestens einen zweiten Werkzeugkomponente (20) relativ zur Pressrichtung während des Verpressens.

2. Verfahren nach Anspruch 1, wobei die Schwingungen senkrecht zur Pressenrichtung eingebracht werden.

3. Verfahren nach Anspruch 1 oder 2, wobei die Schwingung parallel oder in einer optimierten Wirkrichtung in die Erzeugnisgeometrie eingebracht werden.

4. Verfahren nach einem der Ansprüche 1 bis 3, wobei die Schwingungen über das mindestens eine Formteil (21) eingebracht werden.

5. Verfahren nach einem der Ansprüche 1 bis 4, wobei die Frequenz der Schwingungen während des Verpressens verändert wird.

6. Verfahren nach einem der Ansprüche 1 bis 5, wobei die Schwingungsdauer und die Dauer des Pressvorgangs verschieden sind.

7. Verfahren nach einem der Ansprüche 1 bis 6, wobei der Druck zum Verpressen während des Verpressens verändert wird.

8. Verfahren nach einem der Ansprüche 1 bis 7, wobei die Frequenz der Schwingungen und/oder die Schwingungsdauer an den Druck zum Verpressen angepasst werden.

9. Verfahren nach einem der Ansprüche 1 bis 8, wobei die Schwingungen in einer Ebene senkrecht zur Pressrichtung durch eine lineare oder rotierende Bewegung eingebracht werden.

10. Verfahren nach einem der Ansprüche 1 bis 9, wobei die Schwingungen nach Maßgabe einer Erzeugnisgeometrie des herzustellenden Erzeugnisses eingebracht werden.

11. Formwerkzeug zur Herstellung von dreidimensionalen Erzeugnissen mit mindestens einem schrägen Erzeugnisabschnitt aus einem faserhaltigen Material, aufweisend mindestens eine erste Werkzeugkomponente (12) mit mindestens einer Kavität (13) und mindestes eine zweite Werkzeugkomponente (20) mit mindestens einem zur mindestens einen Kavität (13) korrespondierenden Formteil (21), wobei das mindestens eine Formteil (21) und die mindestens eine Kavität (13) zur Ausbildung eines Formraums (11) zwischen korrespondierenden Oberflächen (14; 22) der mindestens einen Kavität (13) und des mindestens einen Formteils (21) relativ zueinander bewegbar und zum Verpressen eines in den Formraum (11) einbringbaren faserhaltigen Materials verpressbar sind, ferner aufweisend eine Einrichtung (30) zum Einbringen von Schwingungen durch Bewegung der mindestens einen ersten Werkzeugkomponente (12) und/oder der mindestens einen zweiten Werkzeugkomponente (20) senkrecht zur Pressrichtung während eines Verpressens.
